# EUROPEAN PATENT APPLICATION

(11) **EP 3 026 463 A1**
(43) Date of publication of application: **01.06.2016**
(21) Application number: 14829616.3
(22) Date of filing: 17.07.2014
(51) Int. Cl.: G01T 1/17, G01T 1/16

(54) **RADIATION MEASUREMENT DEVICE**

(30) Priority: 23.07.2013 JP 2013152822
(71) Applicant: Hitachi Aloka Medical, Ltd., Tokyo 181-8622 (JP)
(72) Inventor: OBATA, Toshiro, Mitaka-shi, Tokyo 181-8622 (JP); YOKOYAMA, Takaaki, Mitaka-shi, Tokyo 181-8622 (JP); HONDA, Toshiya, Mitaka-shi, Tokyo 181-8622 (JP); YAMAGUCHI, Akihito, Mitaka-shi, Tokyo 181-8622 (JP)
(74) Representative: Strehl Schübel-Hopf & Partner
(86) International application number: PCT/JP2014/069033
(87) International publication number: WO 2015/012191

(57) **Abstract**

A first calculation unit calculates a moving average (dose rate) using a relatively long averaging period (T). A second calculation unit calculates an integrated value (dose rate) using a relatively short time constant (τ). In a state in which the moving average is displayed, an alarm determination unit identifies a dose abnormality on the basis of the integrated value. Within a measurement start period, a display switching determination unit identifies a constant dose rate state on the basis of the integrated value. A restoration determination unit identifies the restoration of a dose rate on the basis of the integrated value. If a dose rate is displayed using a large degree of smoothing, sudden increases, and the like, in the dose rate can be identified quickly.

## Description

### Technical Field

The present invention relates to a radiation measurement device, and particular to a radiation measurement device having a plurality of dose rate calculation units having different response characteristics.

### Background Art

Survey meters, monitoring posts, personal dosimeters, etc. are known as radiation measurement devices. Among them, a survey meter will be discussed hereinafter.

A survey meter is generally a device that measures the environmental radiation and calculates a dose rate (typically, a dose value per hour) (for example, see Patent Document 1). A conventional survey meter calculates a dose rate according to a time constant selected by the user from among a plurality of time constants. In radiation measurement, there are recognized statistical fluctuations due to accidental occurrence of radiation; that is, statistical variations. In order to reduce statistical errors and enhance the reliability of the measurements, a dose rate that is smoothed or averaged in time is calculated.

Although, in the past, smoothing processing (integration processing) had been performed by an RC integration circuit serving as an analog circuit, smoothing processing is recently implemented by digital processing. In that case, the degree of smoothing (i.e. responsiveness) is also switched by selecting time constants like before. For example, there are prepared a plurality of time constants, such as 3 seconds, 10 seconds, and 30 seconds, and the user selects a desired time constant according to the frequency of detection of radiation (counting rate).

For the radiation measurement device that calculates a dose rate by smoothing processing according to the time constant as described above, it is generally recommended to read a dose rate after a time point after a lapse of three times of the time constant from the start of measurement, under the situation where the dose rate can be considered to be constant. This is because a large statistical error may occur before that time point.

Normally, if the counting rate is low, a larger time constant (which is longer in time) is selected, while if the counting rate is high, a smaller time constant (which is shorter in time) is selected. Typically, if a larger time constant is selected, although the reliability of the measurements increases, the period from the time point when a change in the dose value occurs until when that change in the dose value appears remarkably in display becomes longer. Namely, the response delay increases. On the contrary, if a smaller time constant is selected, the reliability of the measurements decreases, particularly when the counting rate is low, but response delay decreases.

It is also possible to obtain the dose rate using the method of moving average. That is, the method repeats calculation of dividing a total dose within an average period by the average period for each individual point in time. In this case, if the average period is increased, there is less influence from statistical variations of the counting rate, but the problem of response delay occurs. On the other hand, if the average period is reduced, there is more influence from statistical variations of the counting rate, but the problem of response delay can be alleviated. It is also possible to multiply, in moving average processing, each of a plurality of count values obtained from the present time to the past by a weight, and then perform addition processing. In that case, that moving average processing becomes similar to the above-described smoothing processing according to the time constant, depending on a weight function.

Patent Document 2 discloses a radiation measurement device that determines a time constant to be used based on a difference between two measurements obtained using two different time constants. Patent Document 3 also discloses a radiation measuring device using two time constants simultaneously. However, Patent Documents 2 and 3 do not disclose a technique of determining abnormality in a dose value and the like in the background.

### Citation List

### Patent Documents

Patent Document 1: JP 5042383
Patent Document 2: JP 2009-270850 A
Patent Document 3: JP 2011-185885 A

### Summary of Invention

### Technical Problem

If, in the radiation measurement device, a long time (time constant or average period) is selected as a time condition for smoothing, highly reliable measurement results can be obtained, but if the radiation dose increases sharply, the user cannot recognize such an abnormal event immediately. On the other hand, if, in order to enable quick recognition of changes in radiation dose, a shorter time is selected as the above-described time condition, the reliability of the measurement results decreases substantially.

An objective of the present invention is to enable quick detection of a sharp rise in radiation dose, etc., and immediate handling of such an event, even if the dose rate is calculated and displayed with slow responsiveness. Alternatively, an objective of the present invention is to provide a highly practical radiation measurement device that can measure from a low dose rate to a high dose rate.

### Solution to Problem

A radiation measurement device according to the present invention has a detection unit that detects radiation and outputs a detected pulse train, a first calculation unit that calculates a first dose rate based on the detected pulse train according to a first time condition that brings about first responsiveness, a second calculation unit that calculates a second dose rate based on the detected pulse train according to a second time condition that brings about second responsiveness, the second responsiveness being shorter in time than the first responsiveness, a display unit that displays at least the first dose rate, a determination unit that determines abnormality based on the second dose rate calculated in the background by the second calculation unit in parallel with calculation and display of the first dose rate, and, a report unit that reports the abnormality when the abnormality is determined.

With the above-described structure, if the radiation dose increases sharply while the first dose rate is calculated and displayed with the first responsiveness which is longer in time, it is possible to determine such an abnormality quickly based on the second dose rate calculated in the background and report the abnormality without delay with responsiveness which is shorter in time, even if the change is late in appearing remarkably as a change in the first dose rate. Each time condition is, for example, an average period or a time constant. The average period corresponds to a denominator in a formula for moving average calculation, and the time constant is a coefficient for determining an integral characteristic. Both of the two calculation units may perform moving average calculation or may perform integration calculation. The first calculation unit may be structured as a moving average calculation unit, and the second calculation unit may be structured as an integration calculation unit. The time constant is preferably configured to be switched manually or automatically. The average period is also preferably configured to be set in a variable manner.

Preferably, the first calculation unit is a calculation unit that calculates the first dose rate by applying moving average processing on the detected pulse train according to an average period as the first time condition, and the second calculation unit is a calculation unit that calculates the second dose rate by applying integration processing on the detected pulse train according to a time constant as the second time condition, the average period being greater than three times the time constant.

According to the above-described structure, when the dose rate is calculated with responsiveness which is longer in time; i.e., with a greater degree of smoothing, moving average processing is used, while when the dose rate is calculated with responsiveness which is shorter in time; i.e., with a smaller degree of smoothing, integration processing is used. In moving average processing, the time length that affects the calculation results is limited, while in integration processing, the time length that affects the calculation results is theoretically unlimited. However, in practice, it is generally known that, in integration processing, the time length which is three times a time constant may be used as the time length that substantially affects the calculation results. Therefore, if the average period as the first time condition is greater than three times the time constant as the second time condition, it can be said that the first responsiveness is slower responsiveness in time than the second responsiveness. Generally, if a relatively long period is set as a smoothing period, moving average processing is preferably used, whereas if a relatively short period is set as a smoothing period, integration processing based on a time constant is preferably used.

Preferably, the determination unit determines the abnormality when the second dose rate increases and exceeds a first threshold, the second dose rate being calculated in the background under the situation where the first dose rate is displayed. With this structure, it is possible to determine the abnormality quickly based on the second dose rate obtained by calculation with better responsiveness than the first dose rate, even if the first dose rate is displayed. Therefore, it is possible to achieve both displaying the dose rate with less statistic errors and reporting an abnormal event quickly and reliably. Reporting of abnormality includes not only output of sound, light, etc., but also changes in the display styles, etc.

Preferably, the determination unit determines a display style change when the second dose rate exceeds a second threshold, the second dose rate being calculated in the background under the situation where the first dose rate is displayed within a measurement start period, and the display unit changes a display style of the first dose rate from an initial display style to a normal display style when the display style change is determined. In the situation where the counting rate is low, the reliability of the displayed first dose rate does not increase until after a relatively long term (generally, an average period) has elapsed from a measurement start time point. Meanwhile, in the situation where the dose rate is high to some degree, a certain level of reliability can be expected for the displayed first dose rate, even if such a long period has not elapsed. Accordingly, by changing the display style of the first dose rate when such reliability can be expected, the user can recognize such an event. Within the measurement start period which is a certain period of time defined immediately after the measurement started, the average period is preferably increased stepwise from the start of the measurement.

Preferably, the determination unit resets the first calculation unit when the first dose rate decreases and falls below a third threshold, the first dose rate being calculated in the background under the situation where the first dose rate is displayed. With this structure, it is possible to solve or alleviate the problem that a high value is displayed, in appearance, as the first dose rate due to responsiveness delay even if the real dose rate already decreases--that is, the problem that a real value is greatly deviated from a displayed value. If resetting is performed, the first calculation unit preferably performs moving average calculation based on detection data obtained after resetting. In other words, the detection data obtained before resetting is not used in the moving average calculation, thereby cutting off the remaining influence of smoothing. Naturally, part of the past detection data may be used for convenience of calculation, etc.

Preferably, the detection unit has a first detector having a first size and a second detector having a second size that is smaller than the first size, and the first detector and the second detector are arranged side by side in a main sensitivity direction. With such a superimposition arrangement, it is possible to enhance the space utilization efficiency and miniaturize the detection unit.

Preferably, each of the first calculation unit and the second calculation unit has an addition function of performing dose rate calculation based on both a first detected pulse train from the first detector and a second detected pulse train from the second detector, and a non-addition function of performing dose rate calculation based on only the second detected pulse train. Typically, the addition function is used in the normal (low) dose rate situation, while the non-addition function is used in the high dose rate situation. With the former function, it is possible to enhance the sensitivity. In particular, with the superposition arrangement, it is possible to mitigate the adverse effect that the front side detector interferes with detection of radiation by the rear side detector. With the latter function, by lowering the sensitivity, it is possible to solve or alleviate the problem of occurrence of counting loss in a series of number of pulses on the time axis.

### Brief Description of Drawings

FIG. 1 shows a perspective view of a preferred embodiment of a survey meter according to the present invention.
FIG. 2 shows a diagram of a structure of a detection unit of the survey meter shown in FIG. 1.
FIG. 3 shows a block diagram of functions of the survey meter shown in FIG. 1.
FIG. 4 shows a diagram illustrating moving average processing and integration processing based on a time constant.
FIG. 5 shows a diagram of a display example when a moving average value display mode is selected.
FIG. 6 shows a diagram of a display example when an integrated value display mode is selected.
FIG. 7 shows a block diagram of a function of a control unit shown in FIG. 3.
FIG. 8 shows a diagram of changes in a moving average value over time and changes in an integrated value over time.
FIG. 9 shows a diagram illustrating operation contents in the moving average value display mode and the integrated value display mode.

### Description of Embodiments

A preferred embodiment of the present invention will be described below by reference to the drawings.

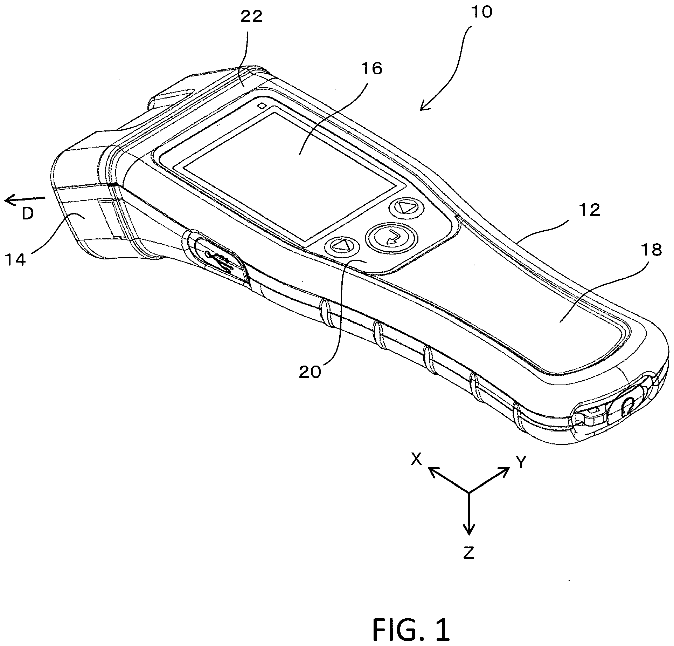

FIG. 1 shows a preferred embodiment of a radiation measurement device according to the present invention. The radiation measurement device according to the present invention is a survey meter. FIG. 1 shows a perspective view of the survey meter.

In FIG. 1, a survey meter 10 is a portable (mobile) radiation measurement device that can be held by the user's hand, and it has a function of measuring the environmental radiation or radiation from a measuring object, and calculating and displaying a dose rate. The survey meter 10 is roughly composed of a body 12 and a tip unit 14. In FIG. 1, the survey meter 10 is covered with a jacket (cover) made of an elastic material. The body 12 has a substantially flat-plate shape extending in the X direction, and, more specifically, the body 12 has a flat shape extending along the XY plane. The body 12 has a display unit 16 and an input unit 20, and also has a grip unit 18 serving as a holding unit on the side nearer than them. The Z direction extending orthogonal to the X direction and the Y direction is the thickness direction of the body 12.

The tip unit 14 is integrally coupled to the body 12 via a bending unit 22. The central axis of the body 12 is parallel to the X axis, and a main sensitivity direction D is defined as an axis inclined with respect to the X axis. The tip unit 14 is bent to the main sensitivity direction D. The survey meter 10 according to the present embodiment detects γ-rays as radiation. The structure according to the present invention may be applied to a device for measuring α-rays, β-rays, etc. Further, the structure according to the present invention may be applied to a fixed installation radiation measurement device.

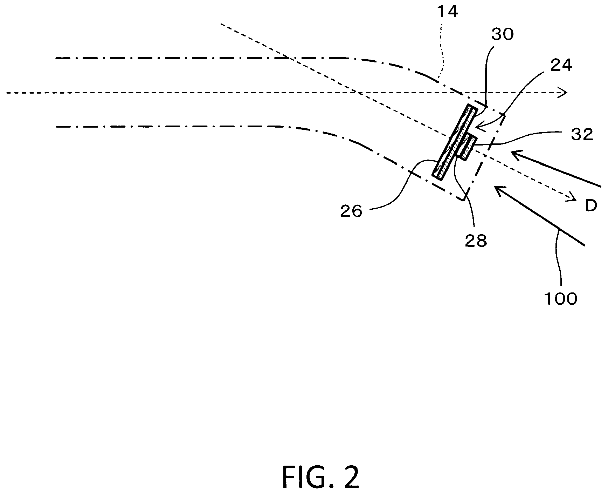

FIG. 2 schematically shows the inside of the tip unit 14. The tip unit 14 has a detection unit 24 therein. The main sensitivity direction D is a direction along which a calibration radiation source is placed when the detection unit 24 is calibrated, and the direction D is inclined with respect to the X direction. The detection unit 24 has a first sensor 26 and a second sensor 28. In the present embodiment, they are both composed of silicon semiconductor sensors. For example, the first sensor 26 has a sensitive area of 10 x 10 mm, and the second sensor 28 has a sensitive area of 3 x 3 mm. Namely, the first sensor 26 is a sensor having a larger size, while the second sensor 28 is a sensor having a smaller size. The two sensors 26 and 28 are arranged side by side and superposed in the main sensitivity direction D with their central axes corresponding to the main sensitivity direction D. There are provided a first filter 30 on the front side of the first sensor 26 and a second filter 32 on the front side of the second sensor 28. Those filters 30 and 32 are provided to adjust energy sensitivity characteristics. The first sensor 26 functions as a supporting substrate of the second sensor 28.

As described below, a detected pulse train output from the first sensor 26 and a detected pulse train output from the second sensor 28 are processed independently. Thus, there are provided two measurement circuits in parallel as described below.

In a low dose rate situation, two counted values obtained by the two sensors 26 and 28 are summed, and the dose rate is calculated based on the summed value. On the other hand, in a high dose rate situation, the dose rate is calculated based on counted values obtained by the smaller second sensor 28. With the present embodiment, it is possible to enhance the detection sensitivity in the low dose rate situation and solve or alleviate the problem of counting loss in the high dose rate situation. Although the second sensor 28 behaves as a shield when viewed from the first sensor 26, the above-described summing can compensate for desensitization which occurs in the first sensor 26 due to the second sensor 28. As shown in FIG. 2, by arranging the two sensors 26 and 28 to superpose along the main sensitivity direction, it is possible to use a limited space effectively and miniaturize the detection unit 24.

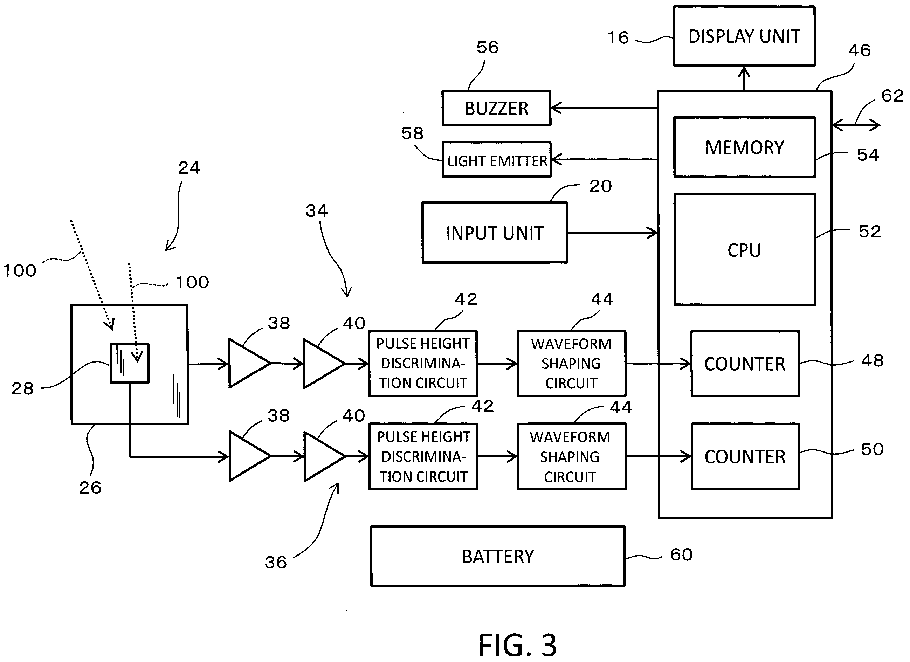

FIG. 3 shows a block diagram of functions of the survey meter shown in FIG. 1.

As described above, the detection unit 24 is composed of the first sensor 26 and the second sensor 28. They detect γ-rays 100. After the detection unit 24, there are provided a first measurement circuit 34 and a second measurement circuit 36. Those measurement circuits 34 and 36 are arranged in parallel and have the same structures. The structure will be explained below using the first measurement circuit 34 as a representative example.

The first measurement circuit 34 has a preamplifier 38, a linear amplifier 40, a pulse height discrimination circuit 42, a waveform shaping circuit 44, and the like. A pulse output from the first sensor 26 is amplified in the linear amplifier 40 via the preamplifier 38. The pulse height discrimination circuit 42 is composed of a comparator and allows a pulse having a predetermined peak value or higher to pass therethrough. The waveform shaping circuit 44 performs waveform shaping processing on the pulse output from the pulse height discrimination circuit 42 and transmits the processed pulse to a counter 48. The counter 48 counts the number of pulses at certain time intervals. An energy correction circuit of the first measurement circuit 34 and the like are omitted from the drawings. Pulse trains output from the second measurement circuit 36 are transmitted to a counter 50, and those pulse trains are counted in the counter 50 at certain time intervals.

A control unit 46 is composed of a microcomputer, a programmable device, a processer, etc., and has a calculating function, a controlling function, etc. In the present embodiment, the control unit 46 has a CPU 52, a memory 54, and the like, in addition to the above-described counters 48 and 50. The CPU 52 operates according to a predetermined program, and in the present embodiment, as described in detail below, the CPU 52 performs moving average calculation and integration calculation based on a time constant. These processes may also be performed in separate processors.

If, for example, a count value counted by the counter 48 is a predetermined value or less, it is determined to be a low dose rate. In that case, the count value counted by the counter 48 and the count value counted by the counter 50 are summed, and the dose rate is calculated based on that summed value. In such a case, necessary conversion processing is applied to one or both of the two count values. Meanwhile, if, for example, the count value counted by the counter 48 is greater than the predetermined value, it is determined to be a high dose rate. In such a case, the dose rate is calculated based on the count value counted by the counter 50. Upon determination of the level of the dose rate, the count value in the counter 50 may be referred to, or both the count values counted by the two counters 48 and 50 may be referred to.

In the present embodiment, the counters 48 and 50 calculate the count values every predetermined time Δt, and in the present embodiment, Δt is 200ms, for example. Of course, such a time condition can be changed as desired.

As described above, in CPU 52, the moving average calculation and the integration calculation are performed in parallel. In the present embodiment, for example, 300s is set as an average period T in the moving average calculation. Naturally, such a time condition may be changeable.

The present embodiment is configured such that the user can select any time constants from a plurality of time constants, in order to perform the integration calculation based on the time constant. In the present embodiment, a plurality of time constants, such as 3s, 10s, and 30s, are prepared as such time constants. The present embodiment can also be configured such that an optimal time constant is selected automatically, and the user does not switch time constants.

Even if any time constant is selected, the length of the average period in the moving average calculation is considerably long, and it takes a certain length of time until a change occurs in the calculation result after the dose rate changed, resulting in slow responsiveness. Meanwhile, compared to the case of moving average processing using the long average period, in the integration calculation based on a relatively short time constant, a good response; that is, quick responsiveness, can be obtained.

The survey meter according to the present embodiment has two display modes for displaying the dose rate. They are a moving average value display mode and an integrated value display mode. In the moving average value display mode, a moving average value (dose rate) obtained by the moving average calculation is displayed, while in the integrated value display mode, an integrated value (dose rate) obtained by the integration calculation is displayed. The user can select a desired display mode according to the situation. For example, in the situation where only one shot of γ-rays or so is detected during several ten seconds, the moving average value display mode for calculating and displaying the dose rate on the relatively long time condition is selected. Meanwhile, in the situation where the detection frequency of γ-rays is high to some degree, the integrated value display mode for calculating and displaying the dose rate on the relatively short time condition is selected. In that case, a time constant which is suitable for the detection frequency is selected.

Either one of the two display modes can be selected. However, concerning calculation of the dose rate, two types of calculations are always performed in parallel. Namely, in the CPU 52, the moving average calculation and the integration calculation are performed in parallel. In doing so, as described below, under the situation where the moving average value display mode is selected; that is, under the situation where display is performed with bad responsiveness, it is possible to determine an abnormal event, such as a sharp rise in radiation dose, using a non-display integrated value calculated in the background, and quickly report such an abnormal event to the user.

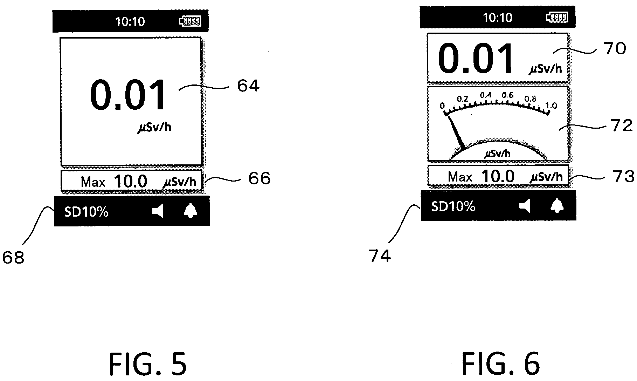

As shown later in FIG. 5 and FIG. 6, the display unit 16 displays the measurement results. If the moving average value display mode is selected, the dose rate as a moving average value is displayed by a numerical value. If the integrated value display mode is selected, the dose rate as an integrated value is displayed as a numerical value and a pseudo meter.

In the present embodiment, the input unit 20 is composed of a plurality of buttons, and the user can use the input unit to select the display mode and select the time constant. A light emitter 58 is composed of one or more LEDs and the like, and when an abnormal event is determined, the light emitter 58 blinks on an off. There is a buzzer 56 for outputting a buzzer sound when an abnormal event is determined. Reference number 62 shows a communication line to the outside, and it is possible to communicate with an external device using infrared, for example. Although, in addition to this, there are also provided a port for earphone connection, a port for a USB connector, and the like, they are omitted from the drawings.

A battery 60 is composed of a primary battery or a secondary battery, and it supplies electrical power to the components shown in FIG. 3.

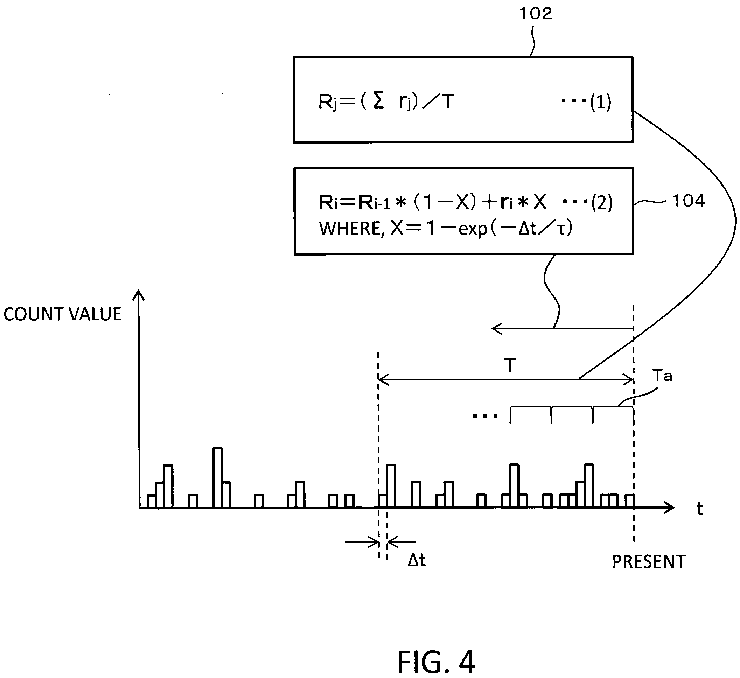

Next, moving average processing and integration processing will be described by reference to FIG. 4. The lower portion of FIG. 4 shows changes in count values over time. The horizontal axis indicates a time axis, and the vertical axis indicates count values. A certain period of time T from the present time to the past is an average period. Δt indicates a count period, such as, for example, 200ms, as described above. The above-described average period T is 300s, for example. A sum of count values may be obtained and stored every predetermined time Ta on the time axis. For example, Ta is 60s.

The block indicated by reference number 102 indicates the moving average calculation. As shown in Equation (1), a sum of count values rⱼ within the average period T is divided by the average period T, thereby calculating the dose rate Rⱼ of the dose value. This corresponds to the moving average value.

Meanwhile, the block indicated by reference number 104 indicates the integration calculation based on the time constant. It is for performing calculation of the content shown in Equation (2). Here, Ri indicates the present dose rate and corresponds to the integrated value. Rᵢ₋₁ is a previous integrated value. rᵢ is a present counted value. X is a coefficient defined by a time constant τ and a sampling interval Δt. The user can switch this time constant τ, thereby switching integral characteristics. In the present embodiment, the display update rate of the moving average values is 60s. That display update rate may be configured to be changeable by the user. The display update rate of the integrated value may be Δt or may be determined according to the time constant.

FIG. 5 shows a display example when the moving average value display mode is selected. Reference number 64 indicates the dose rate as the moving average value, which is displayed in the form of a numerical value. Reference number 66 indicates the maximum value of the dose rate obtained after the start of the measurement. Reference number 68 indicates a standard deviation.

FIG. 6 shows a display example when the integrated value display mode is selected. Reference number 70 is a display of a numerical value, and indicates the dose rate as the integrated value. Reference number 72 indicates a pseudo analog meter which indicates the dose rate as the integrated value. Under the pseudo analog meter, there is indicated a maximum dose rate 73 obtained after the start of measurement. Reference number 74 indicates a standard deviation. The display examples shown in FIG. 5 and FIG. 6 are merely examples. For example, the pseudo analog meter may be displayed in the moving average value display mode.

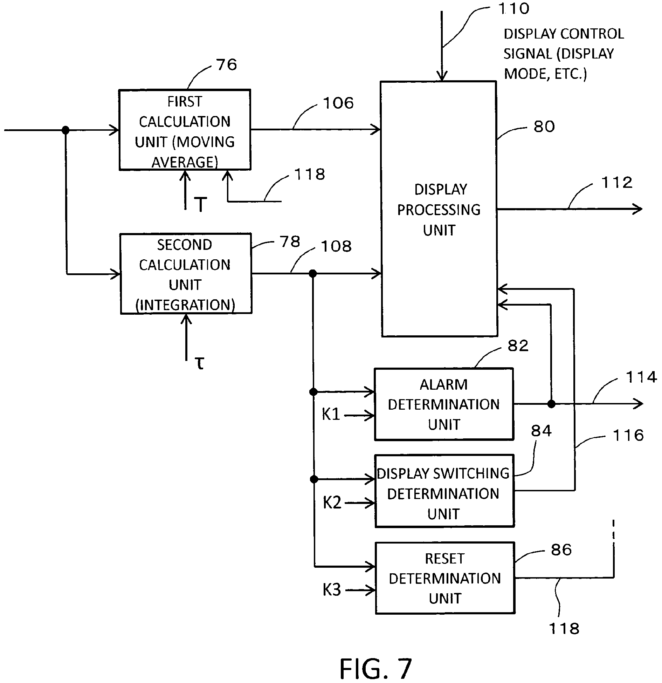

FIG. 7 shows a block diagram of the functions of the control unit shown in FIG. 3. Each block is implemented as a function of software. However, each block may be implemented using a processor, a circuit, etc.

A first calculation unit 76 is a module for performing the moving average calculation. The average period T is referred to for that calculation. The first calculation unit 76 performs the moving average calculation based on a count value train obtained up to the present time, thereby obtaining the dose rate as a moving average value. Data 106 indicating that is transferred to the display processing unit 80. The display processing unit 80 generates a display screen shown in FIG. 5, for example, and outputs a signal 112 displaying that to the display unit.

A second calculation unit 78 is a module for performing the integration calculation. More specifically, the second calculation unit 78 performs the integration calculation based on the count value train, thereby calculating the dose rate as the integrated value. Data 108 indicating that is transmitted to the display processing unit 80. Upon the integration calculation, the second calculation unit 78 refers to the time constant τ selected by the user. The display processing unit 80 configures, for example, the display screen shown in FIG. 6 based on the data 108 indicating the integrated value, and outputs a signal 112 indicating that to the display unit.

The display processing unit 80 has a display control signal 110 as an input. The display processing unit 80 performs display processing according to that display control signal 110. The display control signal 110 is, for example, a signal for specifying the display mode, etc. When the moving average value display mode is selected, the display processing unit 80 enables a moving average value to be displayed on the screen of the display unit. Meanwhile, when the integrated value display mode is selected, the display processing unit 80 performs display processing so that an integrated value is displayed on the screen of the display unit. Because it is highly possible that statistical errors are included in the moving average value obtained during a measurement start period which lasts from the start of the measurement until a lapse of 300s, the display processing unit 80 causes the moving average value to blink on and off in blue within such a period. It means that a standby state is expressed using an initial display style. However, as described below, once display switching is determined, even within the measurement start period, the display style of the moving average value is switched from the initial display style to a normal display style. The normal display style is stationary display in black.

In the present embodiment, the calculated integrated value is transmitted to an alarm determination unit 82, a display switching determination unit 84, and a reset determination unit 86. Hereinafter, each determination unit will be described.

Regardless of the display modes, the alarm determination unit 82 considers that there is a rise in radiation dose and performs alarm determination when the integrated value exceeds a predetermined threshold K1. Namely, when there occurs an abnormal event of a sharp rise in radiation dose, the alarm determination unit 82 determines that abnormal state quickly. Therefore, even if the average value display mode is selected, and the moving average value is displayed, it is possible to determine an abnormal state with good responsiveness based on the integrated value calculated in the background, thereby reporting the determination to the user quickly. An alarm signal 114 output from the alarm determination unit 82 is transmitted to the display processing unit 80 and also to the above-described light emitter and buzzer. When, for example, the alarm signal 114 is generated, the display processing unit 80 changes the display style of the moving average value. The continuous display is switched to the blinking display, and the display color is also switched. Of course, it may be the case that LED blinking and buzzer operation are only performed while the display style is maintained.

When the integration calculation is performed as the calculation in the background, a time constant that has been selected by the user until that time is used as the time constant used in that calculation. However, any one of preselected time constants (for example, 10s) may be used in a fixed manner.

The display switching determination unit 84 functions within the measurement start period, and changes the display styles from the initial display style to the normal display style if, within that period, the moving average value display mode is selected, and the integrated value exceeds a predetermined threshold K2. This enables the user to recognize, when the moving average value is displayed, that the display value has achieved a certain degree of reliability. When the integrated value display mode is selected, this display switching determination unit 48 substantially does not function.

The reset determination unit 86 is a module for determining the resetting of the dose rate if the integrated value is below a predetermined threshold K3 after the alarm determination is made. If the resetting is determined, a reset signal 118 is output to the first calculation unit 76. This resets the moving average calculation which has been performed in the first calculation unit 76. More specifically, the moving average calculation is performed from the beginning based on data obtained after the resetting, and, conversely, by avoiding referring to and being influenced by the data obtained before the resetting, the problem that the unnecessary past data is reflected to the moving average value can be solved. If such resetting occurs, the same operation as that in the measurement start period is performed, and the average period is increased stepwise, to thereby set the normal average period T in the end.

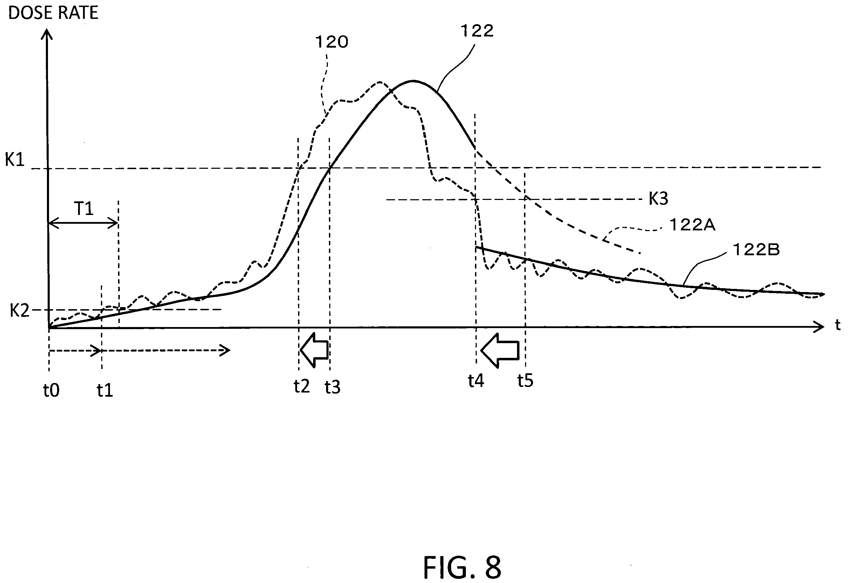

The above-described actions of the determination units 82, 84, and 86 will further be described by reference to FIG. 8.

FIG. 8 depicts changes in the dose rate with exaggeration for description of the invention. Reference number 120 indicates changes in an integrated value, and reference number 122 indicates changes in a moving average value. It is assumed that the integrated value display mode is currently selected. As described above, regardless of the selected display mode, the integrated value is calculated at the same time as the moving average value in a repeated manner. A period T1 after the measurement start point t0 is the measurement start period (initial period), and the period T1 lasts 300s, for example. Within that period, the display style of the moving average value is the initial display style; that is, the moving average value is displayed in blue and in a blinking manner. However, if the integrated value exceeds the predetermined threshold K2, the display style is switched from the initial display style to the normal display style at that time point t1. This enables the user to recognize that there is a certain level of dose rate, and that a certain degree of reliability can be expected from the displayed moving average value. The display switching determination based on the threshold K2 is performed in the period T1.

In the illustrated example, the integrated value and the moving average value increase after that period. However, because a considerably long period is set as the average period in the moving average value calculation, there is a difference between the integrated value and the moving average value in terms of responsiveness. In other words, it can be pointed out that there is a delay in changes in the moving average value with respect to changes in the integrated value. In the illustrated example, the abnormality is determined at a time point t2 where the integrated value exceeds the threshold K1. Although, if the moving average value is compared to the threshold K1, the abnormality can be determined at a time point t3; if the integrated value is compared to the threshold K1, it is possible to determine abnormality in the earlier stage. Moreover, it is possible to continue displaying the moving average value itself and continue the display with fewer statistical errors.

In the example shown in FIG. 8, the dose rate increases and then decreases. In the present embodiment, the resetting is determined at a time point t4 where the integrated value falls below the threshold K3 under the situation where the moving average value is displayed. At that time point t4, the moving average calculation is reset, and the moving average value is calculated based on the data obtained after the time point of the resetting without using the past data. In short, the same processing as that in the measurement start period is performed again.

If the above-described resetting is not performed, the moving average value decreases behind the integrated value, as shown by reference number 122A. In contrast to this, if the reset processing is performed based on the integrated value, a new moving average value can be calculated without being affected by the past data, as shown by reference number 122B. Thus, it becomes possible to obtain the moving average value as a value which is close to an actual dose rate or the integrated value. Further, by determining the resetting based on the integrated value, it is possible to determine the resetting at the time point t4, which is earlier than a time point t5. In addition, upon making the determination based on each threshold, hysteresis characteristics may be included. Although, in the present embodiment, the threshold K1 and the threshold K3 are structured as separate thresholds, they may be integrated.

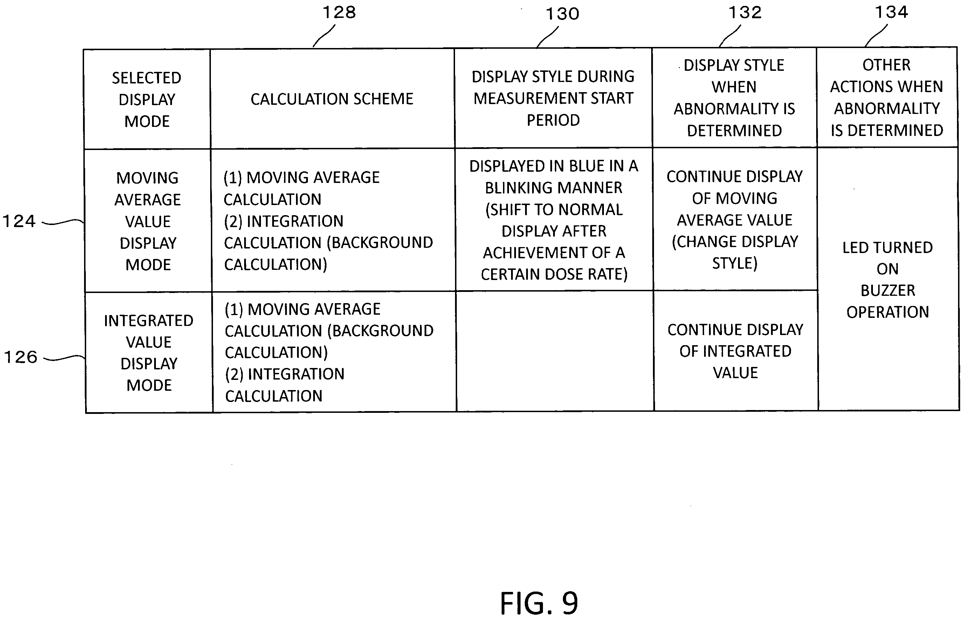

FIG. 9 shows operation contents in the two display modes. The upper row 124 illustrates the moving average value display mode, and the lower row 126 illustrates the integrated value display mode.

In the moving average value display mode, as shown by reference number 128, the moving average calculation is performed, and the integration calculation is also performed as the calculation in the background. As shown by reference number 130, within the measurement start period, the moving average value is displayed in the initial display style; that is, the moving average value is displayed in blue in a blinking manner. However, if the integrated value reaches a certain degree of dose rate, the display style shifts to the normal display style as described above. Further, although, in the moving average value display mode, as shown by reference number 132, the moving average value continues to be displayed when the determination of abnormality is made, the display style may be changed in that case. Reference number 134 indicates other operations when the determination of abnormality is made. In the present embodiment, regardless of the display modes, the LED is turned on, and the buzzer sound is output.

On the other hand, in the integrated value display mode, as shown by reference number 128, in addition to performing the integration calculation, the moving average calculation is also performed as the background calculation. The moving average value is stored. That moving average value may also be used for control. As shown by reference number 132, the integrated value continues to be displayed when the determination of abnormality is made. The contents shown in FIG. 9 are merely examples.

As described above, with the survey meter according to the present embodiment, even if the display mode having late responsiveness is selected, it is possible to calculate the dose rate by background calculation having good responsiveness and perform various determinations based on that. More specifically, it is possible to determine abnormality in dose values early based on the integrated value. Further, it is also possible to allow the user to recognize that a stable state has been reached within the measurement start period based on the integrated value. Furthermore, even if the moving average value is displayed, the resetting can be determined early based on the integrated value. In that case, the moving average calculation is reset, thereby addressing or alleviating delay in change of the displayed value. Thus, according to the present embodiment, it is possible to provide a useful survey meter that artfully uses a difference in responsiveness.

## Claims

1. A radiation measurement device comprising:
a detection unit that detects radiation and outputs a detected pulse train;
a first calculation unit that calculates a first dose rate based on the detected pulse train according to a first time condition that brings about first responsiveness;
a second calculation unit that calculates a second dose rate based on the detected pulse train according to a second time condition that brings about second responsiveness, the second responsiveness being shorter in time than the first responsiveness;
a display unit that displays at least the first dose rate;
a determination unit that determines abnormality based on the second dose rate calculated in the background by the second calculation unit in parallel with calculation and display of the first dose rate; and
a report unit that reports the abnormality when the abnormality is determined.

2. The device according to Claim 1, wherein:
the first calculation unit calculates the first dose rate by applying moving average processing to the detected pulse train according to an average period as the first time condition;
the second calculation unit calculates the second dose rate by applying integration processing to the detected pulse train according to a time constant as the second time condition; and
the average period is greater than three times the time constant.

3. The device according to Claim 1 or 2, wherein the determination unit determines the abnormality when the second dose rate increases and exceeds a first threshold, the second dose rate being calculated in the background under the situation where the first dose rate is displayed.

4. The device according to any one of Claims 1 to 3, wherein:
the determination unit determines a display style change when the second dose rate exceeds a second threshold, the second dose rate being calculated in the background under the situation where the first dose rate is displayed within a measurement start period; and
the display unit changes a display style of the first dose rate from an initial display style to a normal display style when the display style change is determined.

5. The device according to any one of Claims 1 to 4, wherein the determination unit resets the first calculation unit when the first dose rate decreases and falls below a third threshold, the first dose rate being calculated in the background under the situation where the first dose rate is displayed.

6. The device according to one of Claims 1 to 5, wherein the detection unit comprises:
a first detector having a first size; and
a second detector having a second size that is smaller than the first size, wherein the first detector and the second detector are arranged side by side in a main sensitivity direction.

7. The device according to Claim 6, wherein each of the first calculation unit and the second calculation unit has an addition function of performing dose rate calculation based on both a first detected pulse train from the first detector and a second detected pulse train from the second detector, and a non-addition function of performing dose rate calculation based on the second detected pulse train.
